# EUROPEAN PATENT SPECIFICATION

(11) **EP 4 189 950 B1**
(45) Date of publication and mention of the grant of the patent: **24.09.2025**
(21) Application number: 21759394.6
(22) Date of filing: 29.07.2021
(51) Int. Cl.: H04N 1/60, B28B 17/00, B28B 5/02, B28B 11/04, B28C 7/00

(54) **IMAGE IDENTIFICATION METHOD AND SYSTEM FOR PRINTING**
BILDIDENTIFIZIERUNGSVERFAHREN UND -SYSTEM ZUM DRUCKEN
PROCÉDÉ ET SYSTÈME D'IDENTIFICATION D'IMAGE POUR IMPRESSION

(30) Priority: 31.07.2020 IT 202000018793
(43) Date of publication of application: 07.06.2023
(73) Proprietor: System Ceramics S.p.A., 41042 Fiorano Modenese MO (IT)
(72) Inventor: PISTONI, Giuliano, 42031 Baiso (Reggio Emilia) (IT)
(74) Representative: Penza, Giancarlo
(86) International application number: PCT/IB2021/056898
(87) International publication number: WO 2022/024016

(56) References cited:
- EP-A1- 3 424 661
- WO-A1-2018/163124
- WO-A1-2020/003163
- US-A1- 2013 279 751

## Description

### FIELD OF APPLICATION

The present invention relates to an image identification method and system for printing on rigid substrates.

In particular, the present invention relates to an image identification method and system for printing on rigid substrates, in particular ceramic or vitreous ones, and more in particular ceramic tiles or slabs.

More particularly, the present invention relates to an image identification method and system for printing on rigid substrates, the latter being adapted to receive a print executed on the basis of a digital graphic design.

### PRIOR ART

In the ceramic production process, the raw materials normally used for forming tiles are ceramic powders or granules, normally called atomised materials. The production process normally entails spreading the atomised material on a belt or filling a mould with the atomised material, which first undergoes compacting by means of a press and is subsequently fired in a high-temperature kiln in order to sinter the tile and turn it into a genuine ceramic product. Over the years, the technology of ceramic tile production processes has undergone a major evolution whereby the dimensions of the classic ceramic tile have become increasingly larger, also due to market demands.

The increase in the size of ceramic tiles has led the product resulting from the new production processes to be identified with the term ceramic slab, precisely in view of the larger dimensions produced, which can reach 1800mm in width and up to 4800mm in length, with thicknesses of up to 30mm. The term ceramic slab is to be understood as equivalent to ceramic tile or ceramic substrate.

The production of ceramic tiles or slabs of such considerable size has enabled the development of new printing technologies which extend beyond the surface to the inside, through the whole thickness of the slab, in order to better reproduce the characteristic veining of natural stones such as marble or granite. One example of these printing devices is described in publication WO2020026136 A1 of the same applicant. This decoration system allows a mass decoration to be obtained before the pressing step, using coloured raw or atomised materials.

In practical terms, in addition to being able to obtain a surface decoration of the slab through wet digital printing technologies, such as inkjet, normally applied after the pressing step, today it is possible to create mass decorations before the pressing step using coloured ceramic powders or granules.

One problem that has been encountered using the two digital decoration or printing technologies, wet inkjet printing applied after pressing and dry mass decoration applied before pressing, is the non-correspondence or non-perfect superimposition of the decorations produced by each printing process before and after pressing.

The defect encountered is, for example, a non-continuity between the veins of the surface image printed by the digital printer and the veins produced within the mass.

In practical terms, the ceramic tile or slab produced does not correspond to the desired digital graphic design or rather, starting from a digital graphic file representative of the ceramic slab to be reproduced, there is not correspondence with the real image of the slab obtained at the end of the production process, i.e. after firing of the ceramic substrate.

It has been observed that during the pressing step a deformation of the mass decoration occurs, which causes the aforesaid non-correspondence between the digital graphic design and the real image.

Also in printing on raw structured substrates (rigid substrates), the pressing step generates deformations in the substrates such that the structure output by the pressing step, i.e. the structure of the compacted layer, no longer coincides with that determined by the die in the pressing step, where structure means the two-/three-dimensional shape of the compacted layer.

In this case as well, the digital image to be printed by means of an inkjet printer on the rigid substrate after the pressing step will no longer coincide with the structure of the compacted layer.

As the structure has slightly changed, there arises the problem of making the image/structure after pressing coincide with that of the initial digital graphic design, in order to obtain a correct subsequent printing phase. For example WO2020003163 A1 relates to this.

The object of the present invention is to identify a correct image for printing after the pressing step on the basis of the initial graphic design, that is, to identify a print image that takes into account the deformation occurring in the pressing step.

### SUMMARY OF THE INVENTION

The invention is defined by the appended claims.

In a first aspect, the present invention describes an image identification method for printing on rigid substrates comprising the steps of:
defining a digital graphic design representative of a rigid substrate to be produced;
spreading a soft layer of granular or powder ceramic material on
a deposition surface;
pressing the soft layer to obtain a compacted layer;
wherein one or more of said preceding steps are carried out on the basis of said digital graphic design;
acquiring a real image of the compacted layer after the pressing step;
detecting keypoints of the real image;
comparing the keypoints of the real image with keypoints of an image obtained/derived from said predefined digital graphic design;
calculating a portion of said digital graphic design corresponding to a portion of said acquired real image.

The identification method preferably comprises a step of processing said digital graphic design and said real image so as to render them comparable, wherein said processing step precedes said step of comparing said keypoints of the real image.

Said processing step preferably comprises a step of identifying, from said acquired real image in said acquisition step, one or more between:
- a structure of said compacted layer generated in said pressing step;
- a mass decoration generated in said step of spreading a soft layer.

Said structure of said compacted layer is preferably a structure with graphics or without graphics.

Said step of spreading a soft layer of granular or powder ceramic material on a support surface preferably provides for a decoration throughout the whole thickness of the soft layer.

Preferably, said processing step comprises a step of:
filtering one or more between:
   - said predefined digital graphic design to determine a synthetic image of the graphic design;
   - said real image acquired in said acquisition step to determine a synthetic image of the real image;
said filtering being performed in such a way as to render said predefined digital graphic design and said acquired real image comparable.

Said filtering step preferably comprises applying convolution filters and/or gradients, and/or blurring and/or colour adjustments and/or graphic adjustments.

Said detecting step preferably comprises detecting keypoints of said synthetic image of the real image.

Preferably, it is also envisaged to detect keypoints of said synthetic image of the graphic design.

Said comparing step preferably comprises comparing every keypoint of said synthetic image of the real image with all of said keypoints of said synthetic image of the graphic design.

Said comparing step preferably comprises comparing descriptors of every keypoint of the two synthetic images, wherein said descriptors comprise spatial information and neighbourhood information, thereby defining matching keypoints.

Preferably, there is provided a step of defining a transformation function between said real image and said digital graphic design as a function of the relation between said matching points.

Preferably, there is provided a step of applying said transformation function to any portion of the acquired real image, thereby obtaining said portion of said digital graphic design.

Said portion of said digital graphic design preferably represents at least one portion of said rigid substrate

Said step of acquiring a real image of the compacted layer after the pressing step is preferably carried out at the end of said pressing step.

Said step of acquiring a real image of the compacted layer after the pressing step is preferably carried out at the end of a cutting step.

In a second aspect, the present invention describes an image identification system for printing on rigid substrates comprising:
a printer for mass decoration adapted to spread a soft layer of granular or powder ceramic material on a deposition surface on the basis of a digital graphic design representative of a rigid substrate to be produced;
a pressing device adapted to press the soft layer to obtain a compacted layer;
an acquisition system adapted to acquire a real image of the compacted layer after the pressing step;
a first processing unit configured to
   detect keypoints of the real image;
   compare the keypoints of the real image with keypoints of an image obtained/derived from said digital graphic design;
   calculate a portion of said digital graphic design corresponding to a portion of said acquired real image.

In a third aspect the invention describes a method of printing on rigid substrates comprising the steps of:
receiving a file of an image to be printed corresponding at least to a subset of a digital graphic design;
receiving a rigid substrate to be printed on;
detecting on said rigid substrate a portion of the digital graphic design corresponding to a portion of a real image in accordance with one of the preceding aspects of the invention;
wherein the image contained in said portion represents a portion of an image to be printed from the file of the image to be printed;
detecting a corresponding position of the portion of the real image to be printed with respect to the rigid substrate;
processing said image portion to be printed so as to be adapted to said portion of said real image, as a function at least of said detected position, thereby determining a corresponding processed image portion to be printed;
repeating the steps of:
   - detecting on said rigid substrate a portion of the digital graphic design corresponding to a portion of a real image
      and
   - detecting a corresponding position of the portion of the real image to be printed with respect to the rigid substrate
for all the portions forming the real image;
printing on said rigid substrate all the processed image portions to be printed.

Preferably, in said printing step, said processed image portions to be printed are coordinated and aligned with one or more between
a structure of said compacted layer generated in a pressing step;
a mass decoration generated in said step of spreading said soft layer.

In a fourth aspect, the invention describes a system for printing on rigid substrates comprising:
a second processing unit configured to receive a file of an image to be printed corresponding at least to a subset of a digital graphic design;
   - conveyor means adapted to convey a rigid substrate to be printed on towards a decorator device;
   - a first processing unit configured to detect on said rigid substrate a portion of the digital graphic design corresponding to a portion of a real image, in accordance with the second aspect of the invention;
a detection system adapted to detect a corresponding position of the portion of the real image to be printed with respect to the rigid substrate;
wherein said second processing unit is configured to process the image portion to be printed so as to be adapted to said portion of said real image, as a function at least of said detected position;
wherein said first processing unit is configured to repeat the step of detecting on said rigid substrate a portion of the digital graphic design corresponding to a portion of a real image, for all the portions forming the real image;
wherein said detection system is configured to repeat the step of detecting a corresponding position of the portion of the real image to be printed with respect to the rigid substrate, for all the portions forming the real image;
said decorator device is adapted to print on said rigid substrate all the processed image portions.

Preferably, said processed portions to be printed are coordinated and aligned with one or more between
a structure of said compacted layer generated by said pressing device, according to the second aspect of the invention;
a mass decoration generated by said printer for mass decoration adapted to spread said soft layer, according to the second aspect of the invention.

The invention achieves the following further technical effects:
- correspondence between the structure of the rigid substrate after pressing and the digital decoration printed by a decorator device, in particular an inkjet printer;
- correspondence between the mass decoration and the digital decoration printed by a decorator device, in particular an inkjet printer.

The aforesaid technical effects/advantages and other technical effects/advantages of the invention will emerge in greater detail from the description, set forth here below, of an example embodiment given by way of illustration and not by way of limitation with reference to the appended drawings.

### BRIEF DESCRIPTION OF THE DRAWINGS

Figure 1 is a schematic view of an apparatus for producing rigid ceramic substrates/slabs, according to the invention.
Figure 2A is a schematic view of a first example of a rigid substrate/ceramic slab obtained during the implementation of the method of the invention.
Figure 2B is a sectional view along a longitudinal axis of a second example of a rigid substrate/ceramic slab obtained during the implementation of the method of the invention.
Figure 3 shows a block diagram of the identification method of the invention.
Figure 4 shows a detail of a block of the diagram in figure 3 or figure 1.
Figure 5 shows a block diagram of a printing method according to the invention.
Figure 6 shows a block diagram of a printing system according to the invention.
Figure 7 shows a detail of a block of the diagram in figure 6.
Figures 8.1 to 8.10 show detailed steps of a particular example embodiment of the present invention.

### DETAILED DESCRIPTION

The invention describes an image identification method for printing on rigid substrates.

On the basis of a digital graphic design representative of a rigid substrate to be produced, the invention comprises producing a mass decoration that is pressed to obtain a compacted layer and of which a real image is subsequently acquired; a comparison between keypoints of the real image and of the image of the digital graphic design enables the identification of a portion of the digital graphic design corresponding to a portion of the acquired image.

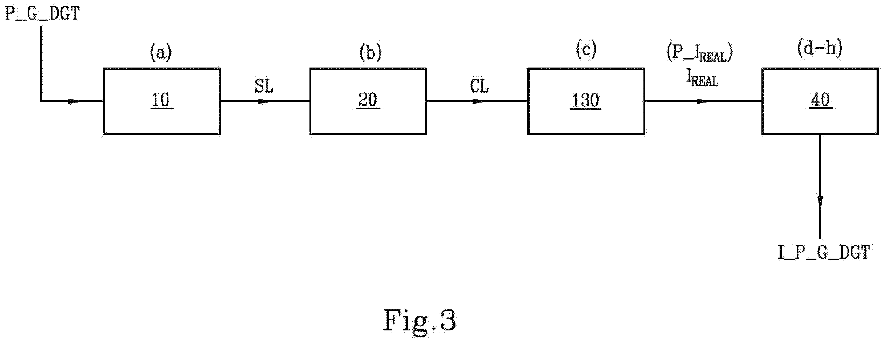

With reference to the figures and in particular to figure 3, the invention comprises a step 0) of defining a digital graphic design P_G_DGT representative of a rigid substrate to be produced.

In the course of the description, rigid substrates will mean in particular ceramic or vitreous substrates, more particularly ceramic tiles or slabs.

The production process comprises an initial step of preparing the rigid substrate.

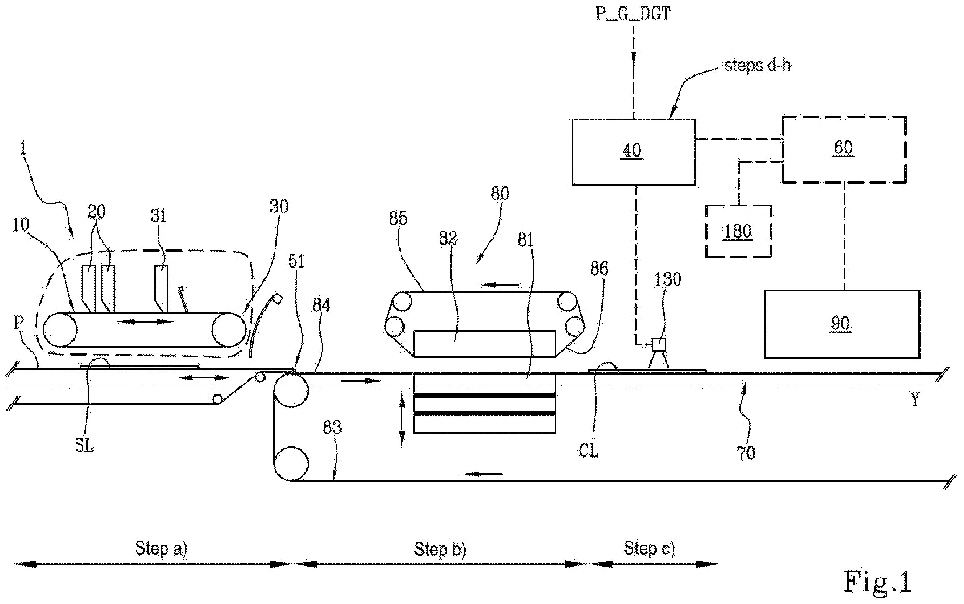

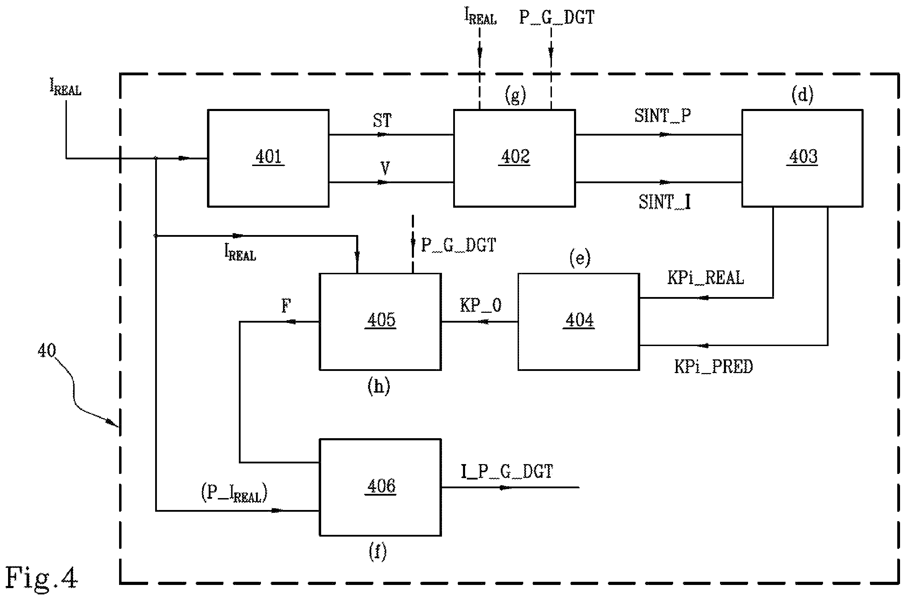

Specifically, with particular reference to figures 1 and 4, the invention comprises a step a) of spreading a soft layer SL of granular or powder ceramic material on a deposition surface P.

With particular reference to figure 1, the spreading of the soft layer SL takes place, for example, by means of a machine for mass decoration 10,20,30,31 described in patent application WO2020121098A1 of the same applicant, hereinafter indicated as "machine for mass decoration 1".

The soft layer SL can have one or more areas of different colour. The spreading of the soft layer determines the graphics of the rigid substrate.

The rigid substrate, as understood in the course of the description that follows, comprises the compacted layer CL obtained as a result of a pressing step.

The graphics of the rigid substrate is the previously mentioned mass decoration.

In one embodiment of the invention, the spreading of the soft layer SL of granular or powder ceramic material on the deposition surface P provides for a decoration throughout the whole thickness of the soft layer SL.

With particular reference to figure 1, the printer for mass decoration 1 is adapted to spread the soft layer SL of granular or powder ceramic material on the deposition surface P on the basis of a digital graphic design P_G_DGT representative of a rigid substrate to be produced.

The soft layer SL is intended for a subsequent pressing step b) for obtaining a compacted layer CL, which is subjected to further cutting, decoration and firing steps.

The invention comprises a step b) of pressing the soft layer SL to obtain a compacted layer CL, comprised in the rigid substrate.

In a possible embodiment, the deposition surface P is a mobile surface which, in addition to allowing spreading, is also adapted to convey the soft layer SL to a pressing device 80.

Therefore, a pressing device 80 is adapted to carry out said pressing step b).

For example, the pressing device 80 is in the form of a belt press, known in the art for pressing large-sized slabs.

With particular reference to figure 1, a press of this type comprises a lower die 81, provided with a pressing surface facing upwards, whilst an upper die 82, provided with a pressing surface facing downwards, is situated above the lower die.

At least one of the two dies is movable towards and away from the other in order to carry out pressing of the soft layer SL.

The press further comprises a mobile surface 83, in the form of a flexible belt, which has an active portion 84 disposed at least partially between the upper die 82 and the lower die 81.

The press also comprises a second mobile surface 85, in the form of a flexible belt, which has an active portion 86 disposed between the active portion 84 of the first mobile belt 83 and the upper die 82.

In a preferred but not exclusive embodiment, the soft layer SL is transferred from the deposition surface P to the mobile surface 83 of the press according to the solution described in publication WO2017051275 of the same applicant.

According to that solution, the deposition surface P, in the portion on which the soft layer SL is deposited, is substantially aligned and contiguous, at a greater height, with the active or outgoing portion 84 of the mobile surface 83, along a longitudinal forward travel direction Y, with a front end 51 of the deposition surface P at least partially above a rear end 83a of the mobile surface 83.

In an alternative solution, the deposition surface P extends between the dies 81,82, i.e. the mobile surface 83 is not present and pressing of the soft layer SL takes place directly on the deposition surface P.

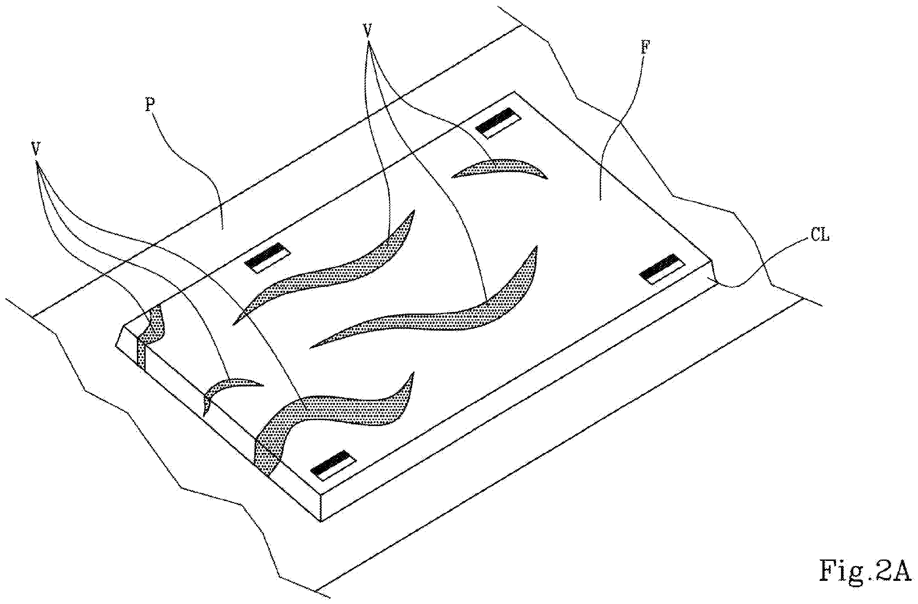

Preferably, with particular reference to figure 2a, the soft layer SL is provided with a mass decoration V comprising veining and/or other decorative patterns that extend from the upper surface F of the slab, i.e. the surface intended to remain in view after it is laid in place, to within the thickness of the soft layer SL.

The machine for mass decoration 1 is adapted to precisely control the pattern of the mass decoration V, which is created during spreading of the soft layer SL.

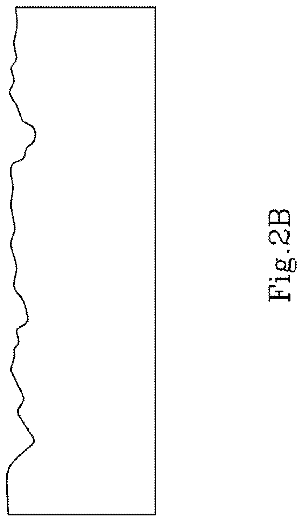

During pressing, the pressing device 80 can determine surface hollows and reliefs. If present, this result will be called surface structure ST, as shown in figure 2B, in which the sizes of the different parts shown are not necessarily to scale.

Preferably, the rigid substrate, which comprises the compacted layer CL, can have a mass decoration and / or a surface structure ST.

Preferably, other processes can be applied to the rigid substrate, such as the application of coloured powders, coloured liquids, chiselling, engraving, 3D printing or other processes.

The digital graphic design P_G_DGT contains or is representative of all the characteristics of the rigid substrate before pressing, i.e. related to the mass decoration V, after pressing, i.e. related to the compacted layer CL with or without the surface structure ST, and after the decoration step, in particular the digital printing.

In practical terms, the digital graphic design P_G_DGT is representative of one or more of these characteristics: mass decoration V and/or surface structure ST, and digital printing.

If present, these processes will generate other product characteristics.

According to the invention, the mass decoration, the structure and the other characteristics mentioned are defined by the digital graphic design P_G_DGT, which makes them deterministic and repeatable.

Consequently, one or both of steps a) and b) are carried out on the basis of the predefined digital graphic design P_G_DGT.

As already noted, during the spreading step a) and the pressing step b), the rigid substrate undergoes mechanical deformations, not predictable beforehand, which determine a deformation of the compacted layer CL and determine a non-exact correspondence with the starting digital graphic design P_G_DGT.

In other words, the real image output from the pressing step, hereinafter indicated as I_{REAL}, is an image that is deformed compared to the image of the starting design.

According to the invention, the deformation is calculated by comparing the real image of the rigid substrate in transit with an image representative of the starting digital graphic design.

The deformation is calculated on the basis of a perspective transformation matrix that transforms the space of the real image of the rigid substrate in transit into the space of the image of the starting digital graphic design P_G_DGT.

It will likewise be possible, by applying the inverse transformation matrix to an image of the digital graphic design, to derive a deformed image that corresponds to the rigid substrate in transit, that is, to the real image I_{REAL}.

With reference to figures 1 and 3, according to the invention there is thus provided a step c) of acquiring a real image I_{REAL} of the compacted layer CL after the pressing step b).

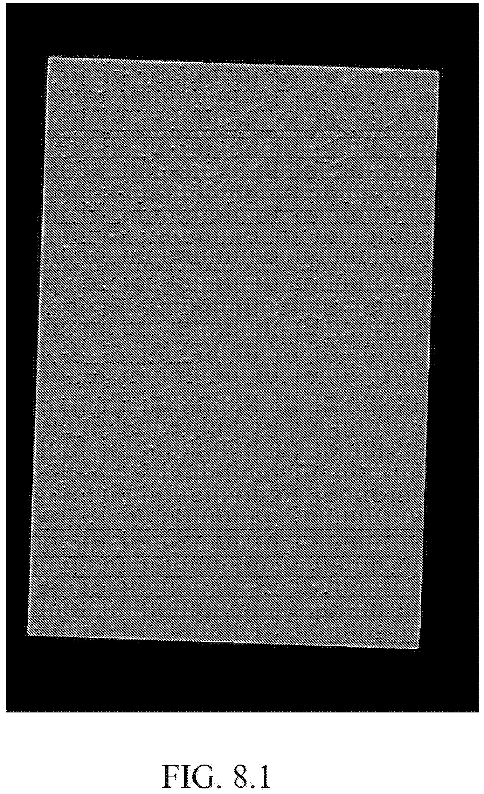

The result of the aforesaid step c), in a particular example embodiment, is shown in figure 8.1.

An acquisition system 130 is adapted to acquire the real image I_{REAL} of the compacted layer CL after the pressing step.

The acquisition system 130 preferably comprises one or more optical detectors of a type known in the art, in particular a camera.

Preferably, one or more optical detectors 130 are positioned downstream of the pressing device 80 and upstream of a decorator device 90, in particular an inkjet printer (fig.1).

Each optical detector 130 is connected to a first processing unit 40, described below, in order to transmit the acquired real image I_{REAL} to the latter.

According to the invention, in general, the acquisition can be carried out in an interval of time falling between after the pressing step b) and before the decoration step, in particular a digital printing step.

In one embodiment, the acquisition takes place at the end of the pressing step b).

The technical effect achieved is the detection of the deformation occurring in the rigid substrate in transit, compared to the predefined digital graphic design.

In another embodiment, the acquisition takes place at the end of a cutting step, i.e. in a trimming step after the pressing step b) and before the digital printing step.

The technical effect achieved is the detection of the deformation occurring in the rigid substrate in transit, compared to the predefined digital graphic design.

In a further embodiment, the acquisition takes place both at the end of the pressing step b) and after the cutting step.

The technical effect achieved by the latter embodiment is an even greater efficiency of the entire digital printing process.

With the aim of comparing the real image output from the pressing step with the image of the starting digital graphic design, the invention comprises image processing and comparison steps.

A first processing unit 40 is provided for this purpose with reference to figures 1, 3 and, in particular detail, to figure 4.

In the course of the present description and in the subsequent claims, the first electronic processing unit 40 is logically divided into distinct functional modules (memory modules or operating modules) that perform the functions described.

The first electronic processing unit 40 can consist of a single electronic device, suitably programmed to perform the described functions, and the different modules can correspond to hardware entities and/or routine software that form part of the programmed device.

Alternatively, or in addition, said functions can be performed by a plurality of electronic devices over which the aforesaid functional modules can be distributed.

Moreover, the first electronic processing unit 40 can rely on one or more processors to execute the instructions contained in the memory modules; the aforesaid functional modules can also be distributed over different local or remote computers based on the architecture of the network they reside in.

According to the invention, there is provided a step e₀) of processing the digital graphic design P_G_DGT and the real image I_{REAL} in such a way as to render them comparable, that is, compatible for a comparison.

With particular reference to figure 4, the processing unit 40 is configured to carry out step e₀.

In particular, step e₀ comprises a sub-step of identifying, from the real image I_{REAL} acquired in the acquisition step c), one or more between:
- the structure ST of the compacted layer CL generated in the pressing step b);
- a mass decoration V generated in step a) of spreading the soft layer SL.

The first processing unit 40 is configured to carry out the described identification sub-step; in particular, the first processing unit 40 comprises a first processing module 401 configured to carry out the described identification sub-step.

Step e₀, according to the invention, further comprises a sub-step g) of filtering one or more between:
- the predefined digital graphic design P_G_DGT, to determine a synthetic image SINT_P of the graphic design;
- the real image I_{REAL}, acquired in step c), to determine a synthetic image SINT_I of the real image.

According to the invention, the filtering is performed in such a way as to render the predefined digital graphic design P_G_DGT and the acquired real image I_{REAL} comparable.

Preferably, the filtering sub-step g) comprises applying convolution filters and/or gradients, and/or blurring and/or colour adjustments and/or graphic adjustments.

The first processing unit 40 is configured to carry out the described filtering sub-step; in particular, the first processing unit 40 comprises a filter module 402 configured to carry out the described filtering sub-step.

According to the invention, there is provided a further step d) of detecting keypoints KPi__{REAL} of the real image I_{REAL}.

In particular, according to the invention, step d) comprises detecting keypoints KPi__{REAL} of the synthetic image SINT_I of the real image.

In particular, according to the invention, step d) comprises detecting keypoints KPi_pred of the synthetic image SINT_P of the graphic design.

The first processing unit 40 is configured to carry out the described detecting step d); in particular, the first processing unit 40 comprises a detection module 403 configured to carry out the described detecting step d).

The invention comprises a step e) of comparing the keypoints KPi__{REAL} of the real image I_{REAL} with keypoints KPi_pred of an image I_G_DGT obtained/derived from the predefined digital graphic design P_G_DGT.

A reference to "keypoints" in the literature can be found in the expired US patent no. 6711293, entitled "Method and apparatus for identifying scale invariant features in an image and use of same for locating an object in an image".

It is understood that the keypoints are independent of visual characteristics of the image and are rather dependent on the position of an "object" in that image.

In other words, with particular reference to ceramic substrates, the keypoints are not extracted from predefined graphic characteristics visible on the ceramic substrate, such as specific streaks and/or variegations and/or veins, but rather represent characteristic points detectable within the whole image, and thus not only in specific predefined areas. In other words, as will be described below, every keypoint is endowed with a descriptor Car_Kp that comprises spatial information I_Spa and neighbourhood information I_int.

The spatial information I_Spa comprises a position coordinate of the keypoint, whereas its value, i.e. the neighbourhood information I_int, is derived through an analysis of tone and/or brightness and/or colour present in the neighbourhood I_int thereof.

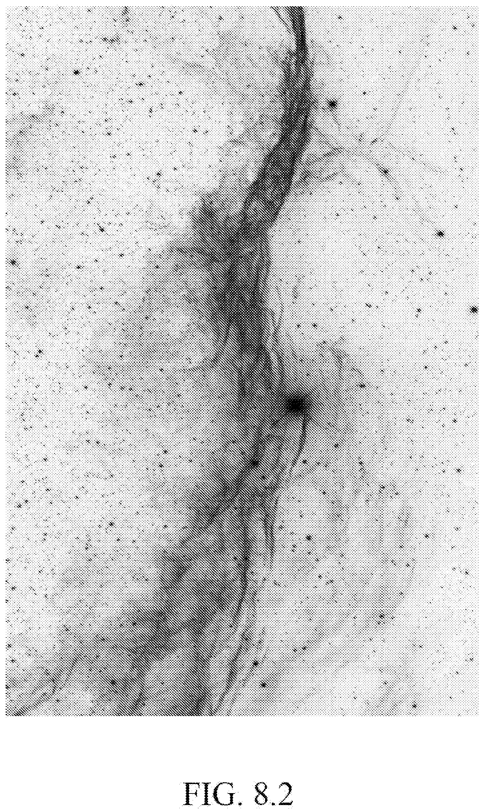

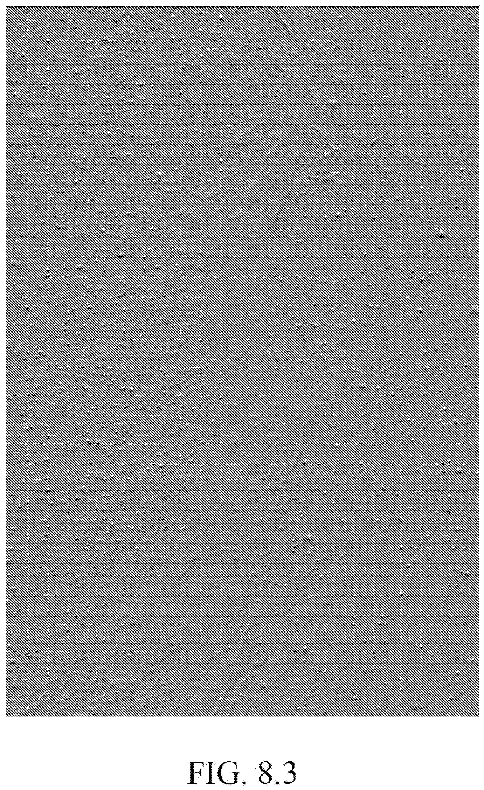

The digital graphic design P_G_DGT and the image I_G_DGT, in a particular example embodiment of the present invention, are shown respectively in figures 8.2 and 8.3.

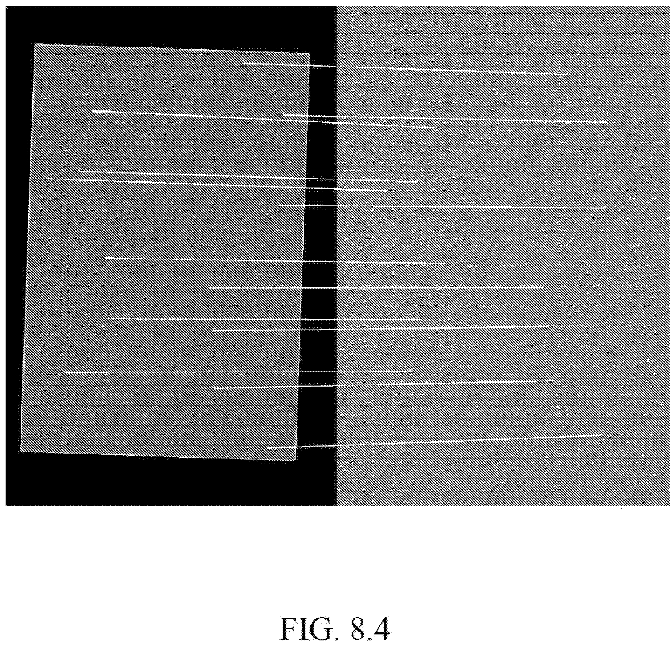

A comparison between the keypoints KPi__{REAL} of the real image I_{REAL} and the keypoints KPi_pred of an image I_G_DGT in the particular example embodiment is shown in figure 8.4.

The first processing unit 40 is configured to carry out the described comparison step e); in particular, the first processing unit 40 comprises a comparison module 404 configured to carry out the described comparison step e).

According to the invention, step e) envisages comparing every keypoint KPi__{REAL} of the synthetic image SINT_I of the real image with all the keypoints KPi_pred of the synthetic image SINT_P of the graphic design.

Every keypoint is endowed with a descriptor Car_Kp that comprises spatial information I_Spa and neighbourhood information I_int.

The spatial information I_Spa comprises a position coordinate of the keypoint, whereas the neighbourhood information I_int comprises a value representative of tone and/or brightness and/or colour of the keypoint.

The comparison step e) provides for a comparison between the descriptors Car_Kp of every keypoint of the synthetic image SINT_I of the real image and all the descriptors Car_Kp of the synthetic image SINT_P of the graphic design

The technical effect is a definition of matching keypoints KP_O between the synthetic images, i.e. keypoints between the synthetic images in a homographic relationship.

In general, homography, in the logics-mathematical literature, is a relationship between points of two spaces, in this specific case the two aforesaid synthetic images, so that every point of one space corresponds to one and only one point of the second space.

In particular, a homographic transformation (or transformation function) applied to the points of the synthetic image SINT_I makes it possible to obtain the transformed synthetic image SINT_P and vice-versa.

After the matching keypoints KP_O have been defined, the invention comprises a step h (fig.4) of defining a transformation function F between the real image I_{REAL} and the digital graphic design P_G_DGT as a function of the relation between the matching keypoints KP_O.

The first processing unit 40 is configured to carry out the described step h); in particular, the first processing unit 40 comprises a definition module 405 configured to carry out the described step h).

The invention comprises, at this point, a step f) of calculating a portion I_P_G_DGT of the digital graphic design P_G_DGT corresponding to a portion P_I_{REAL} of the acquired real image I_{REAL}.

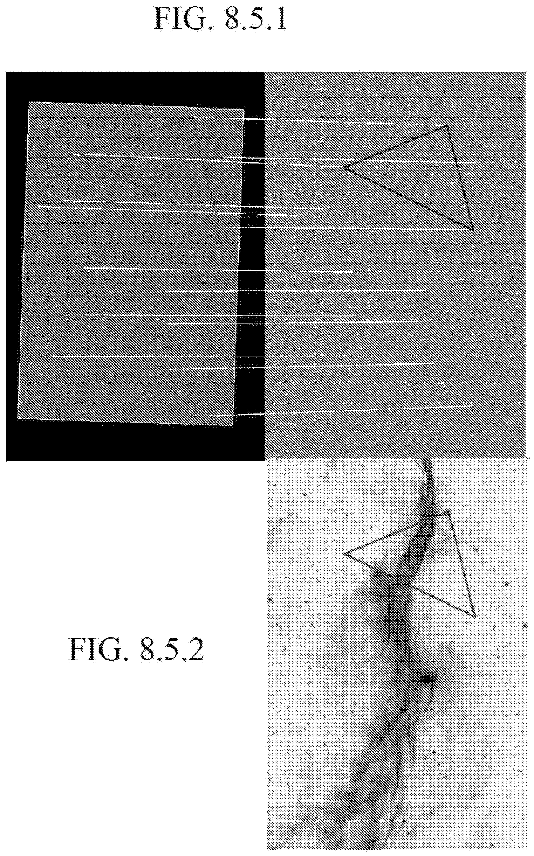

Figure 8.5 shows step f) in a particular example embodiment of the present invention
In particular, figure 8.5.1 shows the portion I_P_G_DGT (top right square) of the digital graphic design P_G_DGT calculated by the portion P_I__{REAL} of the acquired real image I_{REAL} (top left square); in this particular example, the portion considered has the shape of a triangle.

In particular, figure 8.5.2 shows the portion I_P_G_DGT located in the image IPRINT to be printed on the rigid substrate.

In order to obtain the portion I_P_G_DGT of the digital graphic design P_G_DGT, i.e. to calculate a portion I_P_G_DGT of the digital graphic design P_G_DGT corresponding to a portion P_I_{REAL} of the acquired real image (IREAL) (step f), the invention envisages applying the transformation function F to any portion P_I_{REAL} of the acquired real image IREAL.

In one embodiment, the portion P_I_{REAL} can be the tile perimeter, thus the portion is a complete tile.

In an alternative embodiment, the portion P_I_{REAL} is a subset, for example defined by 3 non-aligned keypoints (as in the example in figures 8.5.1. and 8.5.2) or defined by the known Voronoi function, in which at every keypoint a surrounding area is created, which is the portion considered.

The first processing unit 40 is configured to carry out the described calculation step f); in particular, the first processing unit 40 comprises a calculation module 406 configured to carry out the described calculation step f.

The portion I_P_G_DGT of the digital graphic design P_G_DGT represents at least one portion of the rigid substrate.

In other words, the portion defines the whole rigid substrate or a subset thereof.

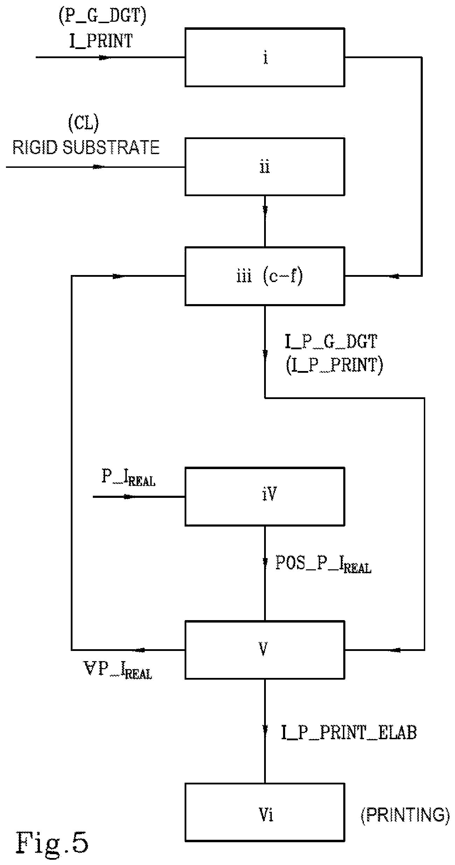

In another aspect, the invention comprises a method of printing on rigid substrates, with particular reference to the block diagram in figure 5.

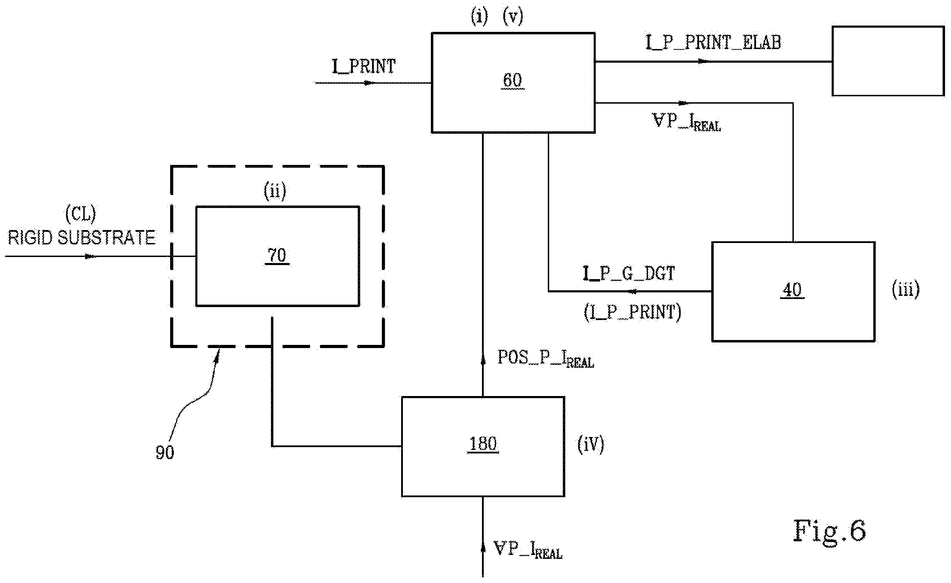

The printing method is implemented by a printing system, as schematically shown in figure 6, provided with a second electronic processing unit 60 adapted to process information of images and manage processed image printing operations.

In the course of the present description and in the subsequent claims, the second electronic processing unit 60 is logically divided into distinct functional modules (memory modules or operating modules) that perform the functions described.

The second electronic processing unit 60 can consist of a single electronic device, suitably programmed to perform the described functions, and the different modules can correspond to hardware entities and/or routine software that form part of the programmed device.

Alternatively, or in addition, said functions can be performed by a plurality of electronic devices over which the aforesaid functional modules can be distributed.

Moreover, the second electronic processing unit 60 can rely on one or more processors to execute the instructions contained in the memory modules; the aforesaid functional modules can also be distributed over different local or remote computers based on the architecture of the network they reside in.

The method, according to the invention, comprises (i) receiving a file of an image to be printed I__{PRINT} corresponding at least to a subset of a digital graphic design P_G_DGT.

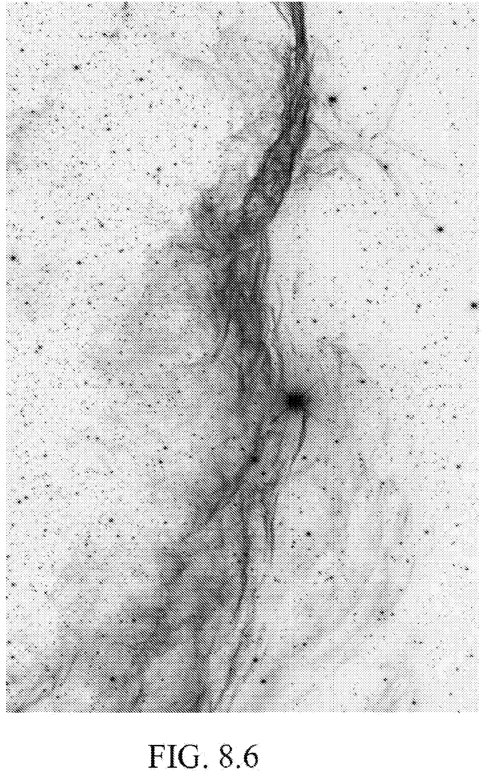

The received image to be printed I__{PRINT}, in a particular example embodiment of the present invention, is shown in figure 8.6.

Subset means, for example, a particular channel (or layer) of one of the channels (or layers) making up the digital graphic design P_G_DGT.

With particular reference to figure 6, the processing unit 60 is configured to carry out the described step (i).

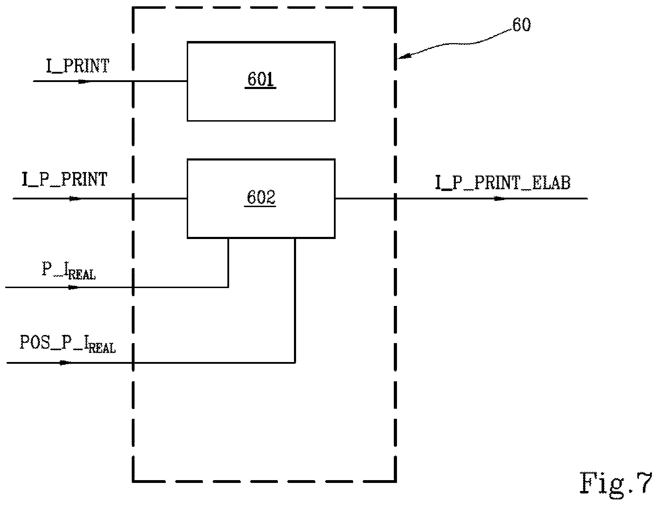

In particular, the processing unit 60 comprises a receiving module 601 (fig. 7) configured to carry out the described step (i).

The invention further comprises a step of receiving (ii) a rigid substrate, comprising the compacted layer CL, to be printed on.

The step of receiving (ii) by the decorator device 90, in particular a printing unit, is carried out by suitable conveyance means 70, for example a mobile surface.

The invention further comprises a step (iii) of detecting on the rigid substrate a portion I_P_G_DGT of the digital graphic design P_G_DGT corresponding to a portion P_I_{REAL} of a real image I_{REAL}.

This detecting step (iii) is carried out according to what was previously described in steps c-f of the first aspect of the invention.

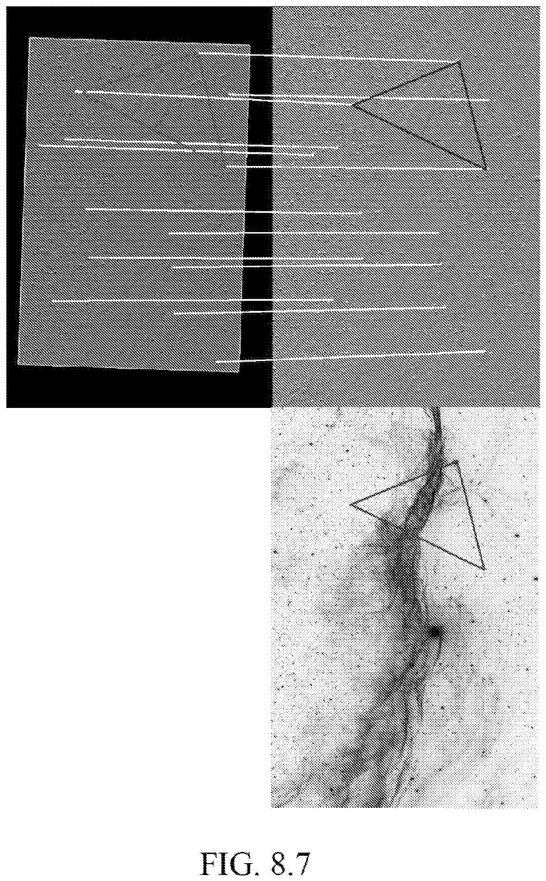

Steps c-f, in a particular example embodiment of the present invention, are shown in figure 8.7.

The first processing unit 40 (fig.4), previously described, carries out the detecting step (iii).

According to the invention, the image contained in the portion I_P_G_DGT represents a portion of an image to be printed I_P__{PRINT} from the file of the image to be printed I__{PRINT}.

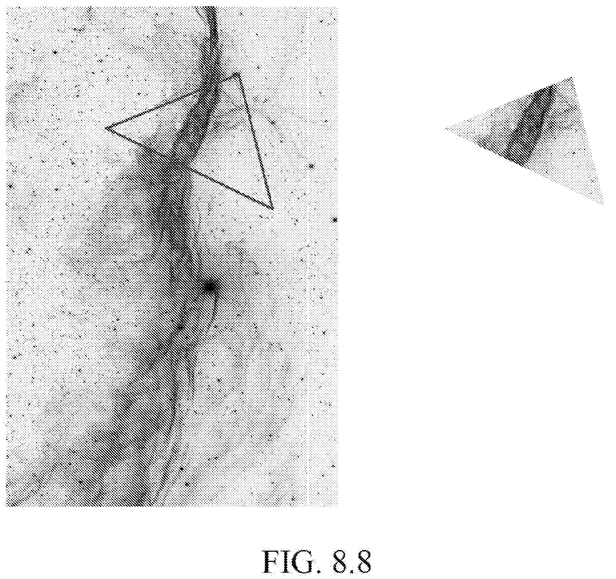

The image contained in the portion I_P_G_DGT in a particular example embodiment of the present invention is shown in figure 8.8.

The invention further comprises a step (iv) of detecting a corresponding position POS P_I_{REAL} of the portion P_I_{REAL} of the real image I_{REAL} to be printed with respect to the rigid substrate.

A detection system 180 is adapted to carry out step (iv).

In particular, the system is described in the published patent application WO2017/149508 of the same applicant.

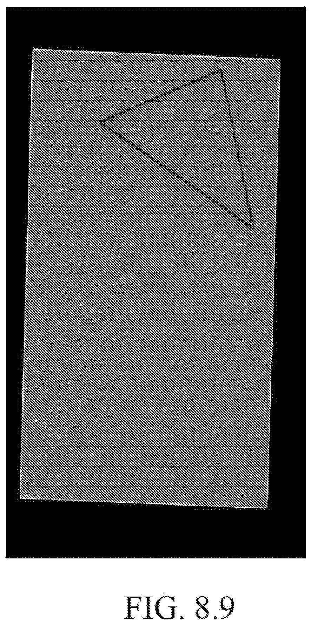

The result of this step, in a particular example embodiment of the present invention, is shown in figure 8.9.

The invention further comprises a step of processing (v) the image portion to be printed I_P__{PRINT} so as to be adapted to the portion P_I_{REAL} of the real image I_{REAL}, as a function at least of the detected position POS P_I_{REAL}, thereby determining a corresponding processed image portion to be printed I_P__{PRINT}__{ELAB}.

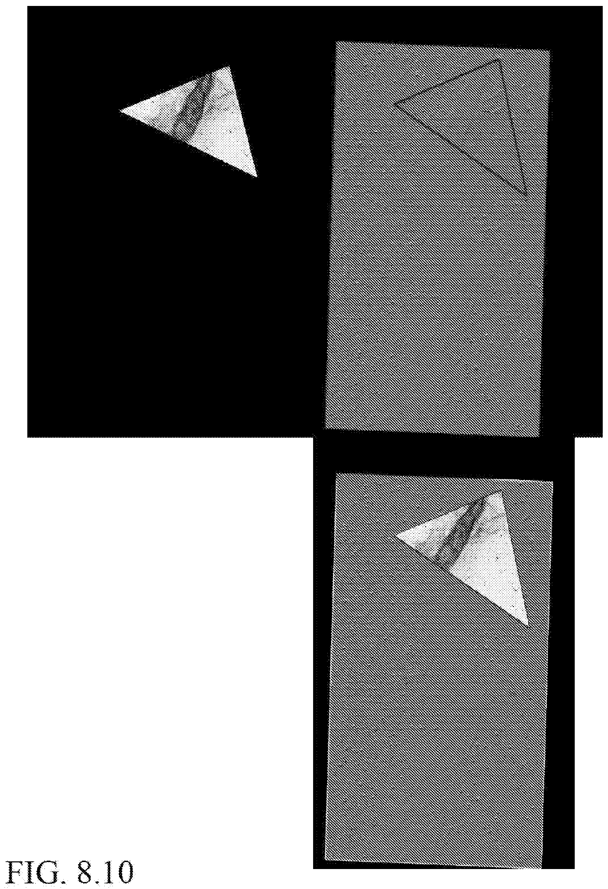

In a particular example embodiment of the present invention, shown in figure 8.10, the image portion to be printed I_P__{PRINT} is shown in the top left square, the portion P_I_{REAL} of the real image I_{REAL} is shown in the top right square, whereas the image portion to be printed I_P__{PRINT}, adapted and positioned for printing in superimposition, is shown in the bottom square.

With particular reference to figure 6, the second processing unit 60 is configured to carry out the aforesaid processing step (v).

In particular, the processing unit 60 comprises a processing module 602 (fig. 7) configured to carry out the described step (v).

Essentially, the second processing unit 60 modifies the image portion to be printed I_P_print on the basis of the deformation occurring in the mass decoration V during the pressing step, defined by the transformation function F, and of the detected position POS P_I_{REAL}.

The invention envisages repeating steps (iii), (iv) and (v) for all the portions P_I_{REAL} forming the real image I_{REAL}.

In other words, the first processing unit 40 is configured to repeat step (iii), the detection system 180 is configured to repeat step (iv) and the second processing unit 60 is configured to repeat step (v) for all the portions P_I_{REAL} forming the real image I_{REAL}.

The invention comprises, as the final step, printing (vi) on the rigid substrate comprising the compacted layer (CL) all the processed image portions to be printed LP__{PRINT}__{ELAB}. A decorator device 90, in particular an inkjet printer, is adapted to print on the rigid substrate all the processed image portions I_P__{PRINT}__{ELAB}.

According to the invention, the processed image portions to be printed I_P_ _{PRINT_ELAB} are coordinated and aligned with a structure ST of the compacted layer CL generated in the pressing step b), as previously described.

Alternatively, or in addition, the processed image portions to be printed I_P__{PRINT_ELAB} are coordinated and aligned with a mass decoration V generated in step a) of spreading the soft layer SL, as previously described.

In a particular case, the term coordinated means superimposable or not offset.

In another particular case, the term coordinated means correlated.

An invention that comprises an identification of images for printing on rigid substrates and a corresponding printing method/system has been described.

The invention achieves the following additional technical effects:
- correspondence between the structure of the rigid substrate after pressing and the digital decoration printed by a decorator device, in particular an inkjet printer;
- correspondence between the mass decoration and the digital decoration printed by a decorator device, in particular an inkjet printer.

## Claims

1. An image identification method for printing on rigid substrates comprising the steps of:
0). Defining a digital graphic design (P_G_DGT) representative of a rigid substrate to be produced;
a) spreading a soft layer (SL) of granular or powder ceramic material on a deposition surface (P);
b) pressing the soft layer (SL) to obtain a compacted layer (CL);
wherein one or more of said steps a) and b) are carried out on the basis of said predefined digital graphic design (P_G_DGT);
c) acquiring a real image (I_{REAL}) of the compacted layer (CL) after the pressing step b);
d) detecting keypoints (KPi__{REAL}) of the real image (I_{REAL}),
wherein every keypoint (KPi__{REAL}) is endowed with a descriptor (Car_Kp) that comprises spatial information (I_Spa) and neighbourhood information (I_int), the spatial information (I_Spa) comprising a position coordinate of the keypoint, the neighbourhood information (I_int) comprising a value representative of tone and/or brightness and/or colour of the keypoint (KPi__{REAL});
e) comparing the keypoints (KPi__{REAL}) of the real image (I_{REAL}) with keypoints (KPi_pred) of an image (I_G_DGT) obtained/derived from said predefined digital graphic design (P_G_DGT);
f) calculating a portion (I_P_G_DGT) of said digital graphic design (P_G_DGT) corresponding to a portion (P_I_{REAL}) of said acquired real image (I_{REAL}).

2. The identification method according to claim 1, comprising a step e0) of processing said digital graphic design (P_G_DGT) and said real image (I_{REAL}) so as to render them comparable, wherein said step e0) precedes said step e) of comparing said keypoints ₍KPi__{REAL}) of the real image (I_{REAL}).

3. The identification method according to claim 2, wherein said step e0) comprises a step of identifying, from said real image (I_{REAL}) acquired in said step c), one or more between:
- a structure (ST) of said compacted layer (CL) generated in said pressing step b);
- a mass decoration (V) generated in said step a) of spreading a soft layer (SL).

4. The identification method according to any one of the preceding claims, wherein said step of spreading a soft layer (SL) of granular or powder ceramic material on a support surface (P) provides for a decoration throughout the whole thickness of the soft layer (SL).

5. The identification method according to any one of the preceding claims, wherein said processing step e0) comprises a step of:
g) filtering at least one of:
- said predefined digital graphic design (P_G_DGT) to determine a synthetic image (SINT_P) of the graphic design;
- said real image (I_{REAL}) acquired in said step c) to determine a synthetic image (SINT_I) of the real image;
said filtering being performed in such a way as to render said predefined digital graphic design (P_G_DGT) and said acquired real image (I_{REAL}) comparable.

6. The identification method according to claim 5, wherein said step of filtering comprises applying convolution filters and/or gradients, and/or blurring and/or colour adjustments and/or graphic adjustments.

7. The identification method according to any one of claims 5 to 6, wherein said detecting step d) comprises detecting keypoints (KPi__{REAL}) of said synthetic image (SINT_I) of the real image.

8. The identification method according to any one of claims 5 to 7, comprising detecting keypoints (KPi_pred) of said synthetic image (SINT_P) of the graphic design.

9. The identification method according to claims 7 and 8 wherein said step e) comprises
comparing every keypoint (KPi__{REAL}) of said synthetic image (SINT_I) of the real image with all of said keypoints (KPi_pred) of said synthetic image (SINT_P) of the graphic design;
comparing descriptors (Car_Kp) of every keypoint of the two synthetic images, wherein said descriptors (Car_Kp) comprise spatial information (I_Spa) and neighbourhood information (I_int), thereby defining matching keypoints (KP_O).

10. The identification method according to claim 9, comprising a step h) of defining a transformation function (F) between said real image (I_{REAL}) and said digital graphic design (P_G_DGT) as a function of the relation between said matching points.

11. The identification method according to claim 10, comprising a step of applying said transformation function (F) to any portion (P_I_{REAL}) of the acquired real image (I_{REAL}), thereby obtaining said portion (I_P_G_DGT) of said digital graphic design (P_G_DGT) of the calculation step (f), wherein said portion (I_P_G_DGT) of said digital graphic design (P_G_DGT) represents at least one portion of said rigid substrate.

12. The identification method according to claim 11, wherein one of the following applies:
- said portion (P I_{REAL}) is defined by the perimeter of said rigid support, so said portion is the complete rigid support;
- said portion (P I_{REAL}) is defined by a subset of non-aligned keypoints or is defined by the known Voronoi function, wherein at every keypoint a surrounding area is created, which is said considered portion.

13. The identification method according to any one of the preceding claims, wherein
said step c) of acquiring a real image (I_{REAL}) of the compacted layer (CL) after the pressing step b) is carried out at the end of said pressing step b).
OR
said step c) of acquiring a real image (I_{REAL}) of the compacted layer (CL) after the pressing step b) is carried out at the end of a cutting step.

14. An image identification system for printing on rigid substrates comprising:
a printer for mass decoration (1) adapted to spread a soft layer (SL) of granular or powder ceramic material on a deposition surface (P) on the basis of a digital graphic design (P_G_DGT) representative of a rigid substrate to be produced;
a pressing device (80) adapted to press the soft layer (SL) to obtain a compacted layer (CL);
an acquisition system (130) adapted to acquire a real image (I_{REAL}) of the compacted layer (CL) after the pressing step;
a first processing unit (40) configured to
detect keypoints (KPi__{REAL}) of the real image (I_{REAL});
wherein every keypoint (KPi_REAL) is endowed with a descriptor (Car_Kp) that comprises spatial information (I_Spa) and neighbourhood information (I_int), the spatial information (I_Spa) comprising a position coordinate of the keypoint, the neighbourhood information (I_int) comprising a value representative of tone and/or brightness and/or colour of the keypoint (KPi_REAL);
compare the keypoints (KPi__{REAL}) of the real image (I_{REAL}) with keypoints (KPi_pred) of an image (I_G_DGT) obtained/derived from said digital graphic design (P_G_DGT);
calculate a portion (I_P_G_DGT) of said digital graphic design (P_G_DGT) corresponding to a portion (P_I_{REAL}) of said acquired real image (I_{REAL}).

15. A method for printing on rigid substrates, comprising the steps of:
(i) receiving a file of an image to be printed (I__{PRINT}) corresponding at least to a subset of a digital graphic design (P_G_DGT) representative of a rigid substrate to be produced;
(ii) receiving a rigid substrate to be printed on;
(iii) (c-f) detecting on said rigid substrate a portion (I_P_G_DGT) of the digital graphic design (P_G_DGT) corresponding to a portion (P_Ireal) of a real image (I_{REAL});
- wherein the image contained in said portion (I_P_G_DGT) represents a portion of an image to be printed (I_P_print) from the file of the image to be printed (I__{PRINT});
(iv) detecting a corresponding position (POS P_I_{REAL}) of the portion (P_Ireal) of the real image (I_{REAL}) to be printed with respect to the rigid substrate;
(v) processing said image portion to be printed (I_P_print) so as to be adapted to said portion (P_Ireal) of said real image (I_{REAL}), as a function at least of said detected position (POS P_I_{REAL}), thereby determining a corresponding processed image portion to be printed (I_P__{PRINT}__{ELAB});
- repeating steps (iii) and (iv) for all the portions (P_Ireal) forming the real image (I_{REAL});
- (vi) printing on said rigid substrate all the processed image portions to be printed (I_P_PRINT_ELAB).
wherein said detecting step (iii) comprises the steps of:
c) acquiring a real image (I_{REAL}) of a compacted layer (CL) following a pressing step;
d) detecting keypoints (KPi__{REAL}) of the real image (I_{REAL}) as in step d) of claim 1;
e) comparing the keypoints (KPi__{REAL}) of the real image (I_{REAL}) with keypoints (KPi_pred) of an image (I_G_DGT) obtained/derived from said predefined digital graphic design (P_G_DGT);
f) calculating said portion (I_P_G_DGT) of said digital graphic design (P_G_DGT) corresponding to a portion (P_I_{REAL}) of said acquired real image (I_{REAL}).

## Patentansprüche

1. Bildidentifizierungsverfahren zum Drucken auf starren Substraten, umfassend die folgenden Schritte:
0). Definieren eines digitalen Grafikdesigns (P_G_DGT), das für ein herzustellendes starres Substrat repräsentativ ist;
a) Ausbringen einer weichen Schicht (SL) eines granulösen oder pulverförmigen Keramikmaterials auf einer Ablageoberfläche (P);
b) Pressen der weichen Schicht (SL), um eine verdichtete Schicht (CL) zu gewinnen,
wobei einer oder mehrere der Schritte a) und b) auf der Grundlage des vordefinierten digitalen Grafikdesigns (P_G_DGT) durchgeführt werden;
c) Erfassen eines realen Bilds (I_{REAL}) der verdichteten Schicht (CL) nach dem Schritt zum Pressen b);
d) Erkennen von Schlüsselpunkten (KPi__{REAL}) des realen Bilds (I_{REAL}),
wobei ein jeder Schlüsselpunkt (KPi__{REAL}) mit einem Deskriptor (Car_Kp) ausgestattet ist, der räumliche Informationen (I_Spa) und Nachbarschaftsinformationen (I_int) umfasst, wobei die räumlichen Informationen (I_Spa) eine Positionskoordinate des Schlüsselpunkts umfassen und die Nachbarschaftsinformationen (I_int) einen Wert umfassen, der für den Farbton und/oder die Helligkeit und/oder die Farbe des Schlüsselpunkts (KPi__{REAL}) repräsentativ ist;
e) Vergleichen der Schlüsselpunkte (KPi__{REAL}) des realen Bilds (I_{REAL}) mit Schlüsselpunkten (KPi_pred) eines Bilds (I_G_DGT), das aus dem vordefinierten digitalen Grafikdesign (P_G_DGT) gewonnen/abgeleitet wurde;
f) Berechnen eines Abschnitts (I_P_G_DGT) des digitalen Grafikdesigns (P_G_DGT), der einem Abschnitt (P_I_{REAL}) des erfassten realen Bilds (I_{REAL}) entspricht.

2. Identifizierungsverfahren nach Anspruch 1, umfassend einen Schritt e0) zum Bearbeiten des digitalen Grafikdesigns (P_G_DGT) und des realen Bilds (I_{REAL}), sodass diese vergleichbar werden, wobei der Schritt e0) vor dem Schritt e) zum Vergleichen der Schlüsselpunkte (KPi__{REAL}) des realen Bilds (I_{REAL}) erfolgt.

3. Identifizierungsverfahren nach Anspruch 2, wobei der Schritt e0) einen Schritt zum Identifizieren von einem oder mehreren der folgenden Elemente aus dem realen Bild (I_{REAL}), das in Schritt c) erfasst wurde, umfasst:
- einer Struktur (ST) der im Schritt zum Pressen b) erzeugten verdichteten Schicht (CL);
- einer Massendekoration (V), die im Schritt a) zum Ausbringen einer weichen Schicht (SL) erzeugt wurde.

4. Identifizierungsverfahren nach einem der vorhergehenden Ansprüche, wobei der Schritt zum Ausbringen einer weichen Schicht (SL) eines granulösen oder pulverförmigen Keramikmaterials auf einer Trägeroberfläche (P) dafür sorgt, dass eine Dekoration durch die gesamte Dicke der weichen Schicht (SL) erfolgt.

5. Identifizierungsverfahren nach einem der vorhergehenden Ansprüche, wobei der Schritt zum Bearbeiten e0) einen Schritt umfasst zum:
g) Filtern von mindestens
- des vordefinierten digitalen Grafikdesigns (P_G_DGT), um ein synthetisches Bild (SINT-P) des Grafikdesigns zu bestimmen, oder
- des realen Bilds (I_{REAL}), das in Schritt c) erfasst wurde, um ein synthetisches Bild (SINT_I) des realen Bilds zu bestimmen,
wobei das Filtern so durchgeführt wird, dass das vordefinierte digitale Grafikdesign (P_G_DGT) und das erfasste reale Bild (I_{REAL}) vergleichbar sind.

6. Identifizierungsverfahren nach Anspruch 5, wobei der Schritt zum Filtern das Anwenden von Faltungsfiltern und/oder Gradienten und/oder das Verwischen und/oder Farbanpassungen und/oder grafische Anpassungen umfasst.

7. Identifizierungsverfahren nach einem der Ansprüche 5 bis 6, wobei der Schritt zum Erkennen d) Erkennungsschlüsselpunkte (KPi__{REAL}) des synthetischen Bilds (SINT_I) des realen Bilds umfasst.

8. Identifizierungsverfahren nach einem der Ansprüche 5 bis 7, umfassend Erkennungsschlüsselpunkte (KPi_pred) des synthetischen Bilds (SINT_P) des Grafikdesigns.

9. Identifizierungsverfahren nach den Ansprüchen 7 und 8, wobei der Schritt e) Folgendes umfasst:
das Vergleichen eines jeden Schlüsselpunkts (KPi__{REAL}) des synthetischen Bilds (SINT_I) des realen Bilds mit allen Schlüsselpunkten (KPi_pred) des synthetischen Bilds (SINT_P) des Grafikdesigns;
das Vergleichen von Deskriptoren (Ca_Kp) eines jeden Schlüsselpunkts der beiden synthetischen Bilder, wobei die Deskriptoren (Car_Kp) räumliche Informationen (I_Spa) und Nachbarschaftsinformationen (I_int) umfassen, wodurch übereinstimmende Schlüsselpunkte (KP_O) definiert werden.

10. Identifizierungsverfahren nach Anspruch 9, umfassend einen Schritt h) zum Definieren einer Umwandlungsfunktion (F) zwischen dem realen Bild (I_{REAL}) und dem digitalen Grafikdesign (P_G_DGT) abhängig von der Beziehung zwischen übereinstimmenden Punkten.

11. Identifizierungsverfahren nach Anspruch 10, umfassend einen Schritt zum Anwenden der Umwandlungsfunktion (F) auf einen beliebigen Abschnitt (P_I_{REAL}) des erfassten realen Bilds (I_{REAL}), wodurch der Abschnitt (I_P_G_DGT) des digitalen Grafikdesigns (P_G_DGT) des Schritts zum Berechnen (f) gewonnen wird, wobei der Abschnitt (I_P_G_DGT) des digitalen Grafikdesigns (P_G_DGT) mindestens einen Abschnitt des starren Substrats repräsentiert.

12. Identifizierungsverfahren nach Anspruch 11, wobei eine der folgenden Tatsachen zutrifft:
- der Abschnitt (P I_{REAL}) ist durch den Umfang des starren Trägers definiert, sodass der Abschnitt der komplette starre Träger ist;
- der Abschnitt (P I_{REAL}) ist durch eine Teilmenge nicht ausgerichteter Schlüsselpunkte definiert oder ist durch die bekannte Voronoi-Funktion definiert, wobei an jedem Schlüsselpunkt ein Umgebungsbereich geschaffen wird, der der berücksichtigte Abschnitt ist.

13. Identifizierungsverfahren nach einem der vorhergehenden Ansprüche, wobei
der Schritt c) zum Erfassen eines realen Bilds (I_{REAL}) der verdichteten Schicht (CL) nach dem Schritt zum Pressen b) am Ende des Schritts zum Pressen b) durchgeführt wird
ODER
der Schritt c) zum Erfassen eines realen Bilds (I_{REAL}) der verdichteten Schicht (CL) nach dem Schritt zum Pressen b) am Ende eines Schritts zum Schneiden durchgeführt wird.

14. Bildidentifizierungssystem zum Drucken auf starren Substraten, umfassend:
einen Drucker zur Massendekoration (1), der ausgelegt ist, um eine weiche Schicht (SL) von granulösem oder pulverförmigen Keramikmaterial auf einer Ablageoberfläche (P) auf der Grundlage eines digitalen Grafikdesigns (P_G_DGT), das repräsentativ für ein herzustellenden starres Substrat ist, auszubringen;
eine Pressvorrichtung (80), die ausgelegt ist, um die weiche Schicht (SL) zu pressen, um eine verdichtete Schicht (CL) zu gewinnen;
ein Erfassungssystem (130), das ausgelegt ist, um ein reales Bild (I_{REAL}) der verdichteten Schicht (CL) nach dem Schritt zum Pressen zu erfassen;
eine erste Bearbeitungseinheit (40), die konfiguriert ist, um Schlüsselpunkte (KPi__{REAL}) des realen Bilds (I_{REAL} ) zu erkennen,
wobei ein jeder Schlüsselpunkt (KPi_REAL) mit einem Deskriptor (Car_Kp) ausgestattet ist, der räumliche Informationen (I_Spa) und Nachbarschaftsinformationen (I_int) umfasst, wobei die räumlichen Informationen (I_Spa) eine Positionskoordinate des Schlüsselpunkts umfassen und die Nachbarschaftsinformationen (I_int) einen Wert umfassen, der für den Farbton und/oder die Helligkeit und/oder die Farbe des Schlüsselpunkts (KPi_REAL) repräsentativ ist,
die Schlüsselpunkte (KPi__{REAL}) des realen Bilds (I_{REAL}) mit Schlüsselpunkten (KPi_pred) eines Bilds (I_G_DGT), das aus dem digitalen Grafikdesign (P_G_DGT) gewonnen/abgeleitet wurde, zu vergleichen,
einen Abschnitt (I_P_G_DGT) des digitalen Grafikdesigns (P_G_DGT), der einem Abschnitt (P_I_{REAL}) des erfassten realen Bilds (I_{REAL}) entspricht, zu berechnen.

15. Verfahren zum Drucken auf starren Substraten, umfassend die folgenden Schritte:
(i) Empfangen einer Datei eines zu druckenden Bilds (I__{PRINT}) entsprechend mindestens einer Teilmenge eines digitalen Grafikdesigns (P_G_DGT), das repräsentativ für ein herzustellendes starres Substrat ist;
(ii) Empfangen eines zu bedruckenden starren Substrats;
(iii) (c-f) Erkennen auf dem starren Substrat eines Abschnitts (I_P_G_DGT) des digitalen Grafikdesigns (P_G_DGT), der einem Abschnitt (P_lreal) des realen Bilds (I_{REAL}) entspricht,
- wobei das in diesem Abschnitt (I_P_G_DGT) enthaltene Bild einen Abschnitt eines zu druckenden Bilds (I_P_print) aus der Datei des zu druckenden Bilds (I__{PRINT}) repräsentiert;
(iv) Erkennen eines entsprechenden Abschnitts (POS P_I_{REAL}) des Abschnitts (P_Ireal) des realen Bilds (I_{REAL}), der in Bezug auf das starre Substrat zu drucken ist;
(v) Bearbeiten des zu druckenden Bildabschnitts (I_P_print), sodass er dem Abschnitt (P_Ireal) des realen Bilds (I_{REAL}) angepasst wird, abhängig von mindestens der erkannten Position (POS P_I_{REAL}), wodurch ein entsprechendes bearbeitetes zu druckendes Bild (I_P__{PRINT}__{ELAB}) bestimmt wird;
- Wiederholen der Schritte (iii) und (iv) für alle Abschnitte (P_Ireal), die das reale Bild (I_{REAL}) bilden;
- (vi) Drucken aller zu druckenden Bildabschnitte (I_P__{PRINT}__{ELAB}) auf das starre Substrat,
wobei der Schritt zum Erkennen (iii) die folgenden Schritte umfasst:
c) Erfassen eines realen Bilds (I_{REAL}) einer verdichteten Schicht (CL) nach einem Schritt zum Pressen;
d) Erkennen von Schlüsselpunkten (KPi__{REAL}) des realen Bilds (I_{REAL}) wie in Schritt d) aus Anspruch 1;
e) Vergleichen der Schlüsselpunkte (KPi__{REAL}) des realen Bilds (I_{REAL}) mit Schlüsselpunkten (KPi_pred) eines Bilds (I_G_DGT), das aus dem vordefinierten digitalen Grafikdesign (P_G_DGT) gewonnen/abgeleitet wurde;
f) Berechnen des Abschnitts (I_P_G_DGT) des digitalen Grafikdesigns (P_G_DGT), der einem Abschnitt (P_I_{REAL}) entspricht.

## Revendications

1. Procédé d'identification d'image pour impression sur des substrats rigides, comprenant les étapes de :
0). Définir une conception graphique numérique (P_G_DGT) représentative d'un substrat rigide à produire ;
a) étaler une couche souple (SL) de matériau céramique granulaire ou en poudre sur une surface de dépôt (P) ;
b) presser la couche souple (SL) pour obtenir une couche compactée (CL) ;
dans lequel une ou plusieurs desdites étapes a) et b) sont exécutées sur la base de ladite conception graphique numérique prédéfinie (P_G_DGT) ;
c) acquérir une image réelle (I_{REAL}) de la couche compactée (CL) après l'étape de presser b) ;
d) détecter les points clés (KPi__{REAL}) de l'image réelle (I_{REAL}) ;
dans lequel chaque point clé (KPi__{REAL}) est doté d'un descripteur (Car_Kp) qui comprend des informations spatiales (I_Spa) et des informations de voisinage (I_int), les informations spatiales (I_Spa) comprenant une coordonnée de position du point clé, les informations de voisinage (I_int) comprenant une valeur représentative du ton et/ou de la luminosité et/ou de la couleur du point clé (KPi_{_REAL}) ;
e) comparer les points clés (KPi__{REAL}) de l'image réelle (I_{REAL}) avec les points clés (KPi_pred) d'une image (I_G_DGT) obtenue/dérivée de ladite conception graphique numérique prédéfinie (P_G_DGT) ;
f) calculer une portion (I_P_G_DGT) de ladite conception graphique numérique (P_G_DGT) correspondant à une portion (P_I_{REAL}) de ladite image réelle (I_{REAL}) acquise.

2. Procédé d'identification selon la revendication 1, comprenant une étape e0) de traiter ladite conception graphique numérique (P_G_DGT) et de ladite image réelle (I_{REAL}) de manière à les rendre comparables, dans lequel ladite étape e0) précède ladite étape e) de comparer lesdits points clés (KPi__{REAL}) de l'image réelle (I_{REAL}).

3. Procédé d'identification selon la revendication 2, dans lequel ladite étape e0) comprend une étape consistant à identifier, à partir de ladite image réelle (I_{REAL}) acquise dans ladite étape c), une ou plusieurs entre :
- une structure (ST) de ladite couche compactée (CL) générée dans ladite étape de presser b) ;
- une décoration de masse (V) générée à ladite étape a) consistant à étaler une couche souple (SL).

4. Procédé d'identification selon l'une quelconque des revendications précédentes, dans lequel ladite étape consistant à étaler une couche souple (SL) de matériau céramique granulaire ou en poudre sur une surface de support (P) fournit une décoration sur toute l'épaisseur de la couche souple (SL).

5. Procédé d'identification selon l'une quelconque des revendications précédentes, dans lequel ladite étape de traiter e0) comprend une étape de :
g) filtrer au moins l'un de :
- ladite conception graphique numérique prédéfinie (P_G_DGT) pour déterminer une image synthétique (SINT_P) de la conception graphique ;
- ladite image réelle (I_{REAL}) acquise à ladite étape c) pour déterminer une image synthétique (SINT_I) de l'image réelle ;
ledit filtrage étant effectué de manière à rendre ladite conception graphique numérique prédéfinie (P_G_DGT) et ladite image réelle acquise (I_{REAL}) comparables.

6. Procédé d'identification selon la revendication 5, dans lequel ladite étape consistant à filtrer comprend appliquer des filtres de convolution et/ou de gradients, et/ou des réglages de flou et/ou de couleur et/ou des réglages graphiques.

7. Procédé d'identification selon l'une quelconque des revendications 5 à 6, dans lequel ladite étape de détecter d) comprend détecter des points clés (KPi__{REAL}) de ladite image synthétique (SINT_I) de l'image réelle.

8. Procédé d'identification selon l'une quelconque des revendications 5 à 7, comprenant détecter des points clés (KPi_pred) de ladite image synthétique (SINT_P) de la conception graphique.

9. Procédé d'identification selon les revendications 7 et 8, dans lequel ladite étape e) comprend :
comparer chaque point clé (KPi__{REAL}) de ladite image synthétique (SINT_I) de l'image réelle avec tous lesdits points clés (KPi_pred) de ladite image synthétique (SINT_P) de la conception graphique ;
comparer des descripteurs (Car_Kp) de chaque point clé des deux images synthétiques, dans lequel lesdits descripteurs (Car_Kp) comprennent des informations spatiales (I_Spa) et des informations de voisinage (I_int), définissant ainsi des points clés correspondants (KP_O).

10. Procédé d'identification selon la revendication 9, comprenant une étape h) consistant à définir une fonction de transformation (F) entre ladite image réelle (I_{REAL}) et ladite conception graphique numérique (P_G_DGT) en fonction de la relation entre lesdits points correspondants.

11. Procédé d'identification selon la revendication 10, comprenant une étape consistant à appliquer ladite fonction de transformation (F) à une quelconque portion (P_Iᵣₑₐₗ) de l'image réelle (I_{REAL}) acquise, obtenant ainsi ladite portion (I_P_G_DGT) de ladite conception graphique numérique (P_G_DGT) de l'étape de calcul (f), dans lequel ladite portion (I_P_G_DGT) de ladite conception graphique numérique (P_G_DGT) représente au moins une portion dudit substrat rigide.

12. Procédé d'identification selon la revendication 11, dans lequel l'un des éléments suivants s'applique :
- ladite portion (P I_{REAL}) est définie par le périmètre dudit support rigide, de sorte que ladite portion est le support rigide complet ;
- ladite portion (P I_{REAL}) est définie par un sous-ensemble de points clés non alignés ou est définie par la fonction Voronoi connue, dans laquelle au niveau de chaque point clé une zone environnante est créée, qui est ladite portion considérée.

13. Procédé d'identification selon l'une quelconque des revendications précédentes, dans lequel
ladite étape c) consistant à acquérir une image réelle (I_{REAL}) de la couche compactée (CL) après l'étape de presser b) est exécutée à la fin de ladite étape de presser b)
OU
ladite étape c) consistant à acquérir une image réelle (I_{REAL}) de la couche compactée (CL) après l'étape de presser b) est réalisée à la fin d'une étape de couper.

14. Système d'identification d'image pour impression sur des substrats rigides, comprenant :
une imprimante pour décoration de masse (1) adaptée pour étaler une couche souple (SL) de matériau céramique granulaire ou en poudre sur une surface de dépôt (P) sur la base d'une conception graphique numérique (P_G_DGT) représentative d'un substrat rigide à produire ;
un dispositif de pressage (80) adapté pour presser la couche souple (SL) pour obtenir une couche compactée (CL) ;
un système d'acquisition (130) adapté pour acquérir une image réelle (I_{REAL}) de la couche compactée (CL) après l'étape de presser ;
une première unité de traitement (40) configurée pour détecter des points clés (KPi__{REAL}) de l'image réelle (I_{REAL}),
dans lequel chaque point clé (KPi_REAL) est doté d'un descripteur (Car_Kp) qui comprend des informations spatiales (I_Spa) et des informations de voisinage (I_int), les informations spatiales (I_Spa) comprenant une coordonnée de position du point clé, les informations de voisinage (I_int) comprenant une valeur représentative du ton et/ou de la luminosité et/ou de la couleur du point clé (KPi_REAL) ;
comparer les points clés (KPi__{REAL}) de l'image réelle (I_{REAL}) avec les points clés (KPi_pred) d'une image (I_G_DGT) obtenue/dérivée de ladite conception graphique numérique (P_G_DGT) ;
calculer une portion (I_P_G_DGT) de ladite conception graphique numérique (P_G_DGT) correspondant à une portion (P_Iᵣₑₐₗ) de ladite image réelle (I_{REAL}) acquise.

15. Procédé pour impression sur des substrats rigides, comprenant les étapes de :
(i) recevoir un fichier d'une image à imprimer (I__{PRINT}) correspondant au moins à un sous-ensemble d'une conception graphique numérique (P_G_DGT) représentative d'un substrat rigide à produire ;
(ii) recevoir un substrat rigide sur lequel imprimer ;
(iii) (c-f) détecter sur ledit substrat rigide une portion (I_P_G_DGT) de la conception graphique numérique (P_G_DGT) correspondant à une portion (P_I_{REAL}) d'une image réelle (I_{REAL}) ;
- dans lequel l'image contenue dans ladite portion (I_P_G_DGT) représente une portion d'une image à imprimer (I_P_Print) à partir du fichier de l'image à imprimer (I__{PRINT}) ;
(iv) détecter une position correspondante (POS P_I_{REAL}) de la portion (P_Ireal) de l'image réelle (I_{REAL}) à imprimer par rapport au substrat rigide ;
(v) traiter ladite portion d'image à imprimer (I_P_print) de manière à l'adapter à ladite portion (P_Ireal) de ladite image réelle (I_{REAL}), en fonction au moins de ladite position détectée (POS P_Iᵣₑₐₗ), déterminant ainsi une portion d'image traitée correspondante à imprimer (I_P__{PRINT_ELAB}) ;
- répéter les étapes (iii) et (iv) pour toutes les portions (P_Ireal) formant l'image réelle (I_{REAL}) ;
- (vi) imprimer sur ledit substrat rigide toutes les portions d'image traitées à imprimer (I_P__{PRINT_ELAB}) ; dans lequel ladite étape de détecter (iii) comprend les étapes de :
c) acquérir une image réelle (I_{REAL}) d'une couche compactée (CL) suite à une étape de presser ;
d) détecter des points clés (KPi__{REAL}) de l'image réelle (I_{REAL} ) comme à l'étape d) de la revendication 1 ;
e) comparer les points clés (KPi__{REAL}) de l'image réelle (I_{REAL} ) avec les points clés (KPi_pred) d'une image (I_G_DGT) obtenue/dérivée de ladite conception graphique numérique prédéfinie (P_G_DGT) ;
f) calculer ladite portion (I_P_G_DGT) de ladite conception graphique numérique (P_G_DGT) correspondant à une portion (P_I_{REAL}) .
